# EUROPÄISCHE PATENTSCHRIFT

(11) **EP 1 219 840 B1**
(45) Veröffentlichungstag und Bekanntmachung des Hinweises auf die Patenterteilung: **25.02.2004**
(21) Anmeldenummer: 01811200.3
(22) Anmeldetag: 10.12.2001
(51) Int. Cl.: F16B 25/00

(54) **Selbstfurchende Schraube**
Self-tapping screw
Vis auto-taraudeuse

(30) Priorität: 22.12.2000 DE 10064714
(43) Veröffentlichungstag der Anmeldung: 03.07.2002
(73) Patentinhaber: HILTI Aktiengesellschaft, 9494 Schaan (LI)
(72) Erfinder: Michael, Werner, 81547 München (DE); Kaufmann, Herbert, 6922 Wolfurt (AT); Staggl, Romed, 6800 Feldkich (AT); Dobler, Johannes, 6830 Rankweil (AT)
(74) Vertreter: Wildi, Roland

(56) Entgegenhaltungen:
- EP-A- 0 479 586
- EP-A- 0 713 017
- DE-A- 19 856 512
- DE-U- 9 302 186
- US-A- 4 439 077

## Beschreibung

Die Erfindung betrifft eine gewindeformende Schraube zur Verwendung in einem harten Untergrund wie Beton mit einem in Setzrichtung eine Spitze aufweisenden Schaft, der zumindest teilweise eine Profilierung aufweist, die in der Art eines ein- oder mehrgängigen trapezförmigen Gewindes mit einem Grundbereich und von einem, einen Rückenbereich bildenden Aussendurchmesser, der zum Grundbereich hin divergierende Flanken aufweist, gebildet ist, wobei zwei Flankenwinkel unter zunehmender Divergenz zum Grundbereich hin unterschiedliche Winkelbeträge aufweisen.

Schrauben der oben genannten Art dienen zum Befestigen eines Gegenstandes an einem harten Untergrund, wie beispielsweise Beton. Ein Bohrloch im Untergrund dient zur Aufnahme der Schraube. Beim Eindrehen erstellt diese, durch eine an einem Schaft angeordnete Profilierung, ein Gewinde an der Wandung des Bohrloches. Die Härte und Sprödigkeit des Untergrundes erfordern eine spezielle Ausbildung des Gewindes.

Aus der DE-U1-9302186 ist eine derartige Schraube mit einem trapezförmigen Gewinde bekannt. Das Gewinde weist einen Grundbereich und einen, einen Aussendurchmesser bildenden, Rückenbereich auf. Ausserdem weist das Gewinde zum Grundbereich hin divergierende Flanken auf, die zwei unterschiedliche Flankenwinkel von 30° am äusseren und von 60° am inneren Bereich, zum Grundbereich hin, aufweisen. Vorteilhafterweise ergibt sich eine Verstärkung des Gewindes vom Rückenbereich zum Grundbereich hin, da die Materialstärke zunehmend ausgebildet ist. Insbesondere bei harten Untergründen stellt dies eine wesentlich höhere Belastbarkeit sicher.

Nachteilig bei der bekannten Lösung ist, das mangelhafte Eindrehverhalten einer derartig ausgebildeten Schraube, da die Reibung zwischen einer Wandung eines Bohrloches und dem Gewinde der Schraube hoch ist. Eine Folge davon ist beispielsweise ein Materialbruch, der die Schraube unbrauchbar macht.

Ferner ist das Herstellungsverfahren kostenintensiv, da mehrere Walzvorgänge notwendig sind, um ein Profil der bekannten Schraube zu formen.

Der vorliegenden Erfindung liegt die Aufgabe zugrunde, eine gewindeformende Schraube zu schaffen, die wirtschaftlich herstellbar ist und zugleich ein gutes Eindrehverhalten aufweist.

Die erfindungsgemässe Lösung geht davon aus, dass der Rückenbereich einen achsenparallelen Bereich und zumindest teilweise einen um etwa 10° bis 45° entgegen der Setzrichtung zum Grundbereich hin geneigten Neigungsbereich aufweist.

Dadurch, dass der Rückenbereich einen derartig ausgebildeten Neigungsbereich aufweist, kann das Fliessverhalten eines zur Herstellung verwendeten Materials, beispielsweise Stahl, verbessert werden und somit eine voll ausgeformte Geometrie erreicht werden. Durch die voll ausgeformte Geometrie ist ein optimaleres Eindrehverhalten der Schraube sichergestellt. Andererseits entsteht durch den Neigungsbereich beim Eindrehen der Schraube in den Untergrund eine Art "Schneepflug-Verhalten". Das durch den äusseren Rückenbereich zerkleinerte Material wird mittels des Neigungsbereichs abtransportiert und mittels der grösseren Flankenwinkel im Bereich des Grundbereichs festgepresst. Der achsenparallele Rückenbereich übemimmt die Aufgabe eines Meissels. Er baut das Material an einer Wandung einer Bohrung ab.

Vorzugsweise entspricht die Ausdehnung des Rückenbereichs in Setzrichtung etwa dem 1 bis 4-fachen der Ausdehnung des Neigungsbereichs in Setzrichtung, um einen optimalen Abtransport vom abgebauten und zerkleinerten Untergrund sicherzustellen. In Abhängigkeit der Dimensionierung der Schraube und der voraussichtlichen Rahmenbedingungen kann die Ausdehnung des Rückenbereichs in Setzrichtung etwa der Ausdehnung des Neigungsbereichs entsprechen.

Der Grundbereich weist vorteilhafterweise eine schenkelförmige Ausnehmung mit einem Basiswinkel von etwa 150° bis 170° auf. Dieser Winkel ist optimal, um genügend Material zur Herstellung des Gewindes sicherzustellen. Ausserdem findet ein allfälliger Überschuss an zerkleinertem Material Aufnahme in der Ausnehmung und verhindert dadurch, dass sich die Reibung der Schraube beim Eindrehen erhöht.

In einer bevorzugten Ausführungsform kann die Ausnehmung gleichschenkelig ausgebildet, um der Herstellung der erfindungsgemässen Schraube eine Fliessgrenze zu definieren.

Um das Eindrehverhalten optimaler zu gestalten, ist das Gewinde zweigängig ausgebildet ist, wobei die Flankenwinkel mit unterschiedlichen Winkelbträgen an einem ersten Gewindegang angeordnet sind.

Um ein optimales Eindrehverhalten sicherzustellen weist der erste Gewindegang vorzugsweise ein äusseres Flankenpaar mit einem Flankenwinkel von etwa 30° bis 50° und ein inneres Flankenpaar mit einem Flankenwinkel von etwa 60° bis 90° auf,.

Aus herstellungstechnischen Gründen weist der zweite Gewindegang einen Flankenwinkel von etwa 60° bis 90° auf.

Um beim Einschrauben eine optimales Verhältnis zwischen Abbauvorgang und Festpressen des zerkleinerten Materials zu erhalten, entspricht der maximale Aussendurchmesser des ersten Gewindeganges vorzugsweise dem 1,1- bis 1,3-fachen des maximalen Aussendurchmessers des zweiten Gewindeganges.

Ausserdem entspricht der Durchmesser an einem von den unterschiedlichen Winkelbeträgen gebildeten Knickpunkt des ersten Gewindeganges etwa dem 1,2-fachen eines Kerndurchmessers.

Die Erfindung wird nachstehend anhand eines Ausführungsbeispieles näher erläutert.

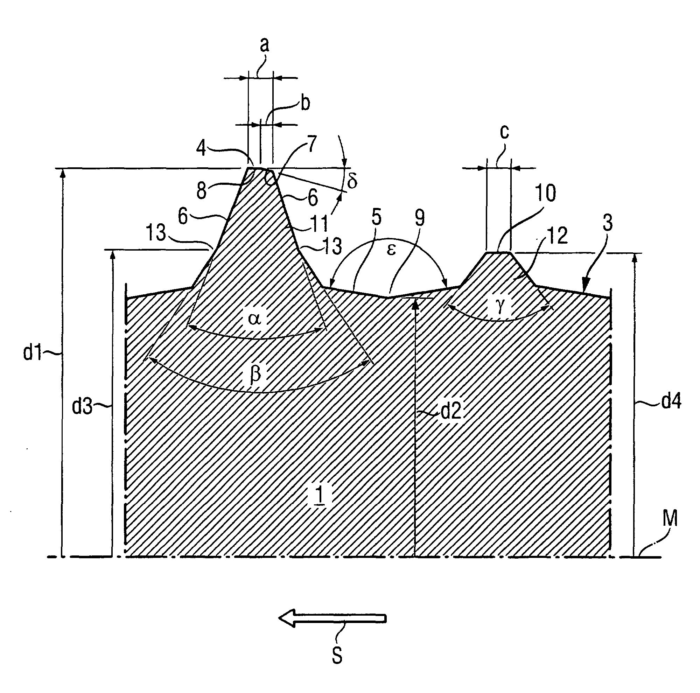

In der Figur ist ein Auschnitt eines Profils einer erfindungsgemässen gewindeformenden Schraube, insbesondere Betonschraube, mit einem in Setzrichtung S eine nicht dargestellte Spitze aufweisenden Schaft 1, dargestellt. Der Schaft 1 weist eine Profilierung 3 in der Art eines trapezförmigen Gewindes auf. Ein den Aussendurchmesser d1 bildender Rückenbereich 4 ist durch eine, zu einem Grundbereich 5 hin divergierende, Flanke 6 verbunden. Das Gewinde kann als doppelgängiges Gewinde, wie dies in der Figur dargestellt ist, oder als einfaches Gewinde ausgebildet sein. Aus Gründen der Übersichtlichkeit ist in der Figur nur eine Seite der Profilierung 3 und die Mittelachse M der erfindungsgemässen Schraube dargestellt.

Der Rückenbereich 4 weist einen achsenparallelen Bereich 8 und einen Winkel δ mit beispielsweise 15° zum Grundbereich 5 hin geneigten Neigungsbereich 7 auf. Der Neigungsbereich 7 schliesst setzrichtungsseitig abgewandt an den achsenparallelen Bereich 8 an. Beim doppelgängigen Gewinde weist der Rückenbereich 10 des zweiten Gewindeganges 12 keinen Neigungsbereich auf.

Die Flanken 6 des ersten Gewindeganges 11 weisen zwei unterschiedliche Flankenwinkel α, β auf, wobei der äussere Flankenwinkel α kleiner ausgebildet ist, als der innere Flankenwinkel β. Der zweite Gewindegang 12 weist einen Flankenwinkel γ von beispielsweise 75° auf und der erste Gewindegang 11 einen Flankenwinkel α von beispielsweise 40° und β von 75°.

Der Grundbereich 5 weist eine gleichschenklige ausgebildete Ausnehmung 9 mit einem Basiswinkel ε von beispielsweise 162° auf.

Der maximale Aussendurchmesser d1 des ersten Gewindeganges 11 entspricht beispielsweise dem 1,24-fachen des maximalen Aussendurchmesser d4 des zweiten Gewindeganges 12. Ferner entspricht der Durchmesser d3 am Knickpunkt 13 des ersten Gewindeganges 11 beispielsweise dem 1,2-fachen des Kerndurchmessers d2 der Schraube. Die Ausdehnung a des Rückenbereichs 4 des ersten Gewindeganges 11 in Setzrichtung S entspricht der Ausdehnung c des Rückenbereichs 10 des zweiten Gewindeganges 12. Ferner entspricht die Ausdehnung a des Rückenbereichs 4 des ersten Gewindeganges 11 in Setzrichtung S dem 2-fachen der Ausdehnung b des Neigungsbereichs 7 in Setzrichtung S.

## Patentansprüche

1. Gewindeformende Schraube zur Verwendung in einem harten Untergrund wie Beton mit einem in Setzrichtung (S) eine Spitze aufweisenden Schaft (1), der zumindest teilweise eine Profilierung (3) aufweist, die in der Art eines ein- oder mehrgängigen trapezförmigen Gewindes mit einem Grundbereich (5) und von einem, einen Rückenbereich (4) bildenden Aussendurchmesser (d1), der zum Grundbereich (5) hin divergierende Flanken (6) aufweist, gebildet ist, wobei zwei Flankenwinkel (α, β) unter zunehmender Divergenz zum Grundbereich (5) hin unterschiedliche Winkelbeträge aufweisen, **dadurch gekennzeichnet, dass** der Rückenbereich (4) einen achsenparallelen Bereich (8) und zumindest teilweise einen um etwa 10° bis 45° entgegen der Setzrichtung (S) zum Grundbereich (5) hin geneigten Neigungsbereich (7) aufweist.

2. Schraube nach Anspruch 1, **dadurch gekennzeichnet, dass** die Ausdehnung (a) des Rückenbereichs (4) in Setzrichtung (S) etwa dem 1 bis 4-fachen der Ausdehnung (b) des Neigungsbereichs (7) in Setzrichtung (S) entspricht.

3. Schraube nach Anspruch 1 oder 2, **dadurch gekennzeichnet, dass** der Grundbereich (5) eine schenkelförmige Ausnehmung (9) mit einem Basiswinkel (ε) von etwa 150° bis 170° aufweist.

4. Schraube nach Anspruch 3, **dadurch gekennzeichnet, dass** die Ausnehmung (9) gleichschenkelig ausgebildet ist.

5. Schraube nach einem der Ansprüche 1 bis 4, **dadurch gekennzeichnet, dass** das Gewinde zweigängig ausgebildet ist, wobei die Flankenwinkel (α, β) mit unterschiedlichen Winkelbeträgen an einem ersten Gewindegang (11) angeordnet sind.

6. Schraube nach Anspruch 5, **dadurch gekennzeichnet, dass** der erste Gewindegang (11) ein äusseres Flankenpaar mit einem Flankenwinkel (α) von etwa 30° bis 50° und ein inneres Flankenpaar mit einem Flankenwinkel (β) von etwa 60° bis 90° aufweist.

7. Schraube nach Anspruch 5 oder 6, **dadurch gekennzeichnet, dass** der zweite Gewindegang (12) geradlinige Flanken aufweist.

8. Schraube nach Anspruch 7, **dadurch gekennzeichnet, dass** der zweite Gewindegang (12) einen Flankenwinkel (γ) von etwa 60° bis 90° aufweist.

9. Schraube nach einem der Ansprüche 5 bis 8, **dadurch gekennzeichnet, dass** der maximale Aussendurchmesser (d1) des ersten Gewindeganges (11) dem 1,1- bis 1,3-fachen des maximalen Aussendurchmessers (d4) des zweiten Gewindeganges (12) entspricht.

10. Schraube nach einem der Ansprüche 1 bis 9, **dadurch gekennzeichnet, dass** der Durchmesser (d3) an einem von den unterschiedlichen Winkelbeträgen gebildeten Knickpunkt (13) des ersten Gewindeganges (11) etwa dem 1,2-fachen eines Kerndurchmessers (d2) entspricht.

## Claims

1. Self-tapping screw for use in a hard surface such as concrete, with a shank (1) exhibiting a tip in the direction of setting (S), which shank exhibits at least in part profiling (3) which is formed in the manner of a single or multiple trapezoid thread with a base area (5) and from an outside diameter (d1) forming a back area (4), which diameter exhibits flanks (6) diverging toward the base area (5), wherein two flank angles (α, β) exhibit different angle sizes as the divergence toward the base area (5) increases, **characterised in that** the back area (4) exhibits a parallax area (8) and at least in part an area of inclination (7) inclined toward the base area (5) at angle of approximately 10° to 45° to the direction of setting (S).

2. Screw according to Claim 1, **characterised in that** the extension (a) of the back area (4) in the direction of setting (S) is approximately equal to 1 to 4 times the extension (b) of the area of inclination (7) in the direction of setting (S).

3. Screw according to Claim 1 or 2, **characterised in that** the base area (5) exhibits a leg-shaped recess (9) with a base angle (ε) of approximately 150° to 170°.

4. Screw according to Claim 3, **characterised in that** the recess (9) has the shape of an isosceles triangle.

5. Screw according to one of Claims 1 to 4, **characterised in that** the thread is designed with two turns, wherein the flank angle (α, β) are arranged with different angle sizes on a first thread (11).

6. Screw according to Claim 5, **characterised in that** the first thread (11) exhibits an outer pair of flanks with a flank angle (α) of approximately 30° to 50° and an inner pair of flanks with a flank angle (β) of approximately 60° to 90°.

7. Screw according to Claim 5 or 6, **characterised in that** the second thread (12) exhibits rectilinear flanks.

8. Screw according to Claim 7, **characterised in that** the second thread (12) exhibits a flank angle (γ) of approximately 60° to 90°.

9. Screw according to one of Claims 5 to 8, **characterised in that** the maximum outside diameter (d1) of the first thread (11) is equal to 1.1 to 1.3 times the maximum outside diameter (d4) of the second thread (12).

10. Screw according to one of Claims 1 to 9, **characterised in that** the diameter (d3) at a break (13) in the first thread (11), formed by the different angle sizes, is approximately equal to 1.2 times a core diameter (d2).

## Revendications

1. Vis autotaraudeuse à employer dans un support dur comme du béton, avec une tige (1) qui, dans la direction d'enfoncement (S), comporte une pointe et qui présente au moins en partie un profilage (3), lequel est conçu à la façon d'un filetage trapézoïdal à pas simple ou multiple avec une zone de fond (5) et avec un diamètre extérieur (d1) qui forme une zone dorsale (4) et qui présente des flancs (6) divergents vers la zone de fond (5), deux angles de flancs (α, β) présentant des valeurs angulaires différentes à mesure que leur divergence augmente vers la zone de fond (5), **caractérisée en ce que** la zone dorsale (4) comporte une zone parallèle à l'axe (8) et au moins partiellement une zone d'inclinaison (7) inclinée d'à peu près 10° à 45° par rapport à la zone de fond (5) à l'opposé de la direction d'enfoncement (S).

2. Vis selon la revendication 1, **caractérisée en ce que** l'extension (a) de la zone dorsale (4) dans la direction d'enfoncement (S) correspond à peu près à 1 à 4 fois l'extension (b) de la zone d'inclinaison (7) dans la direction d'enfoncement (S).

3. Vis selon la revendication 1 ou 2, **caractérisée en ce que** la zone de fond (5) comporte un évidement en forme de V (9) avec un angle de base (ε) d'à peu près 150° à 170°.

4. Vis selon la revendication 3, **caractérisée en ce que** l'évidement (9) présente des branches égales.

5. Vis selon une des revendications 1 à 4, **caractérisée en ce que** le filetage est à double pas, les angles de flancs (α, β) de valeurs angulaires différentes se trouvant sur un premier pas de filetage (11).

6. Vis selon la revendication 5, **caractérisée en ce que** le premier pas de filetage (11) comporte une paire de flancs extérieurs avec un angle de flancs (α) d'à peu près 30° à 50° et une paire de flancs intérieurs avec un angle de flancs (β) d'à peu près 60° à 90°.

7. Vis selon la revendication 5 ou 6, **caractérisée en ce que** le second pas de filetage (12) présente des flancs rectilignes.

8. Vis selon la revendication 7, **caractérisée en ce que** le second pas de filetage (12) présente un angle de flancs (γ) d'à peu près 60° à 90°.

9. Vis selon une des revendications 5 à 8, **caractérisée en ce que** le diamètre extérieur maximal (d1) du premier pas de filetage (11) correspond à 1,1 à 1,3 fois le diamètre extérieur maximal (d4) du second pas de filetage (12).

10. Vis selon une des revendications 1 à 9, **caractérisée en ce que** le diamètre (d3) au niveau d'un point d'inflexion (13) du premier pas de filetage (11) formé par les valeurs angulaires différentes correspond à peu près à 1,2 fois un diamètre de noyau (d2).
